# EUROPÄISCHE PATENTSCHRIFT

(11) **EP 2 923 093 B1**
(45) Veröffentlichungstag und Bekanntmachung des Hinweises auf die Patenterteilung: **10.10.2018**
(21) Anmeldenummer: 13791955.1
(22) Anmeldetag: 06.11.2013
(51) Int. Cl.: F16C 17/10, F16C 17/02, F16C 33/04, F16C 33/14, B23B 41/12

(54) **VERFAHREN ZUR HERSTELLUNG EINES GLEITLAGERS ODER EINES TEILS DAVON**
METHOD FOR MANUFACTURING A PLAIN BEARING OR A PART THEREOF
MÉTHODE DE FABRICATION D'UN PALIER LISSE OU D'UNE PARTIE DE CELUI-CI

(30) Priorität: 26.11.2012 DE 102012221537
(43) Veröffentlichungstag der Anmeldung: 30.09.2015
(73) Patentinhaber: Federal-Mogul Wiesbaden GmbH, 65201 Wiesbaden (DE)
(72) Erfinder: DAMOUR, Philippe, F-56470 La Trinte sur Mer (DE)
(74) Vertreter: Hoffmann Eitle
(86) Internationale Anmeldenummer: PCT/EP2013/073123
(87) Internationale Veröffentlichungsnummer: WO 2014/079685

(56) Entgegenhaltungen:
- WO-A1-2007/088197
- WO-A1-2007/088197
- WO-A1-2012/060301
- DE-A1- 3 905 450
- DE-A1- 3 905 450
- DE-A1- 10 163 292
- DE-A1- 10 163 292
- DE-A1-102005 023 309
- DE-A1-102005 023 309
- DE-A1-102010 031 606
- DE-A1-102010 031 606
- DE-C- 527 271
- DE-C- 527 271
- GB-A- 2 485 807
- JP-A- H1 076 411
- JP-A- 2003 269 454
- JP-A- 2003 269 454
- US-A1- 2011 080 673

## Beschreibung

### Technisches Gebiet

Die Erfindung betrifft ein Verfahren zur Herstellung eines Gleitlagers oder eines Teils davon.

### Stand der Technik

Auf dem Gebiet der Gleitlager ist es beispielsweise aus der DE 10 2005 011 371 A1 bekannt, eine Gleitlagerhälfte in Richtung der Ränder, in Umfangsrichtung gesehen, mit tieferen Nuten zu versehen. Gemäß der DE 10 2005 011 372 A1 kann dies mit einer Veränderung der Tiefe der Nuten in Axialrichtung kombiniert werden. Schließlich gehen aus der JP 2003-269454 A sich in Umfangsrichtung erstreckende Nuten hervor, die zu den axialen Rändern hin entweder tiefer oder breiter werden. Hierfür ist kein Herstellungsverfahren angegeben, so dass offenbleibt, wie diese Gestaltung herstellbar sein soll.

Aus der DE 10 2006 050 246 A1 geht ein hydrodynamisches Gleitlager hervor, das erste Rillen und zweite Rillen aufweist, wobei die zweiten Rillen tiefer sind und ihre Tiefe in Umfangsrichtung variiert. Im Rahmen der Herstellung wird das Gleitlager zwei spindelnden Bearbeitungen unterzogen. Aus der WO 2012/060301 A1 geht ebenfalls ein hydrodynamisches Gleitlager hervor, das erste Rillen und zweite Rillen aufweist, wobei die zweiten Rillen tiefer sind und einen größeren axialen Abstand haben als die ersten Rillen.

### Darstellung der Erfindung

Der Erfindung liegt die Aufgabe zugrunde, ein effizientes Herstellungsverfahren für ein Gleitlager oder ein Teil davon zur Verfügung zu stellen.

Die Lösung dieser Aufgabe erfolgt durch das in Anspruch 1 beschriebene Verfahren.

Im Wesentlichen in Übereinstimmung mit dem oben genannten Stand der Technik wird bei dem erfindungsgemäßen Verfahren die Innenfläche dadurch bearbeitet, dass ein Werkzeug mit einem bestimmten Vorschub in Richtung der Achse des Gleitlagers und einer bestimmten Radialerstreckung umläuft und somit zahlreiche nebeneinander liegende Nuten oder Rillen erzeugt, zwischen denen, zumindest in geringfügigem Ausmaß, Stege verbleiben. Die nachfolgend beschriebene Vergrößerung der Radialerstreckung des Werkzeugs im Laufe der Bearbeitung äußerst sich beispielsweise darin, dass eine Linie, die im Längsschnitt, der die Gleitlagerachse enthält, betrachtet die tiefsten Stellen oder Talsohlen der Nuten verbindet, nicht mehr parallel zur Gleitlagerachse ist.

Demzufolge wird im Rahmen der Bearbeitung zur Herstellung eines Gleitlagers oder eines Teils, insbesondere einer Hälfte davon, die radiale Erstreckung und ein axialer Vorschub zumindest eines Werkzeugs während der Bearbeitung der Innenfläche über deren gesamte Breite verändert. Bei dem Werkzeug kann es sich beispielsweise um ein an einer Bohrspindel vorgesehenes "Bit" handeln. Dieses kann beispielsweise aus polykristallinem Diamant ausgeführt sein. Die Veränderung der Radialerstreckung während der Bearbeitung bedeutet, dass das Werkzeug zur Veränderung dieser Radialerstreckung nicht von dem zu bearbeitenden Lager (Teil) entfernt werden muss. Vielmehr kann während der Bearbeitung und insbesondere während sich dieses dreht, die Radialerstreckung verändert werden, um in bestimmten Bereichen, beispielsweise zumindest einem axialen Randbereich, die verbleibende Wanddicke des Lagers zu verändern, ohne notwendigerweise die Tiefe der ausgebildeten Nuten zu verändern. Dies gilt beispielsweise für Bereiche, in denen lediglich die Radialerstreckung des Werkzeugs, nicht jedoch der Vorschub in Axialrichtung verändert wird. Hierdurch kann in effizienter Weise ein vorteilhaftes Gleitlager(-teil) hergestellt werden. Durch die erfindungsgemäße Möglichkeit, sowohl die Radialerstreckung als auch den Vorschub während der Bearbeitung zu verändern, kann nicht nur, wie vorangehend erwähnt, die Wanddicke des Lagers reduziert werden, sondern es kann sowohl die Tiefe als auch die Breite der ausgebildeten Nuten verändert, insbesondere vergrößert werden. Insbesondere können die hierdurch in der Innenfläche des Gleitlagers ausgebildeten Nuten oder Rillen sowohl über den gesamten Umfang als auch nur in bestimmten Umfangsbereichen verändert werden.

Bei dem Werkzeug kann es sich auch um einen Laser- oder Wasserstrahl handeln. Mit der "radialen Erstreckung" derartiger Strahlen ist in diesem Fall diejenige Tiefe gemeint, mit der die Nuten oder Rillen ausgebildet werden. Es ist somit zu betonen, dass derartige "Werkzeuge" auch die Erfindung verwirklichen, indem sie während der Bearbeitung und demnach nur in bestimmten axialen und/oder Umfangsbereichen eine unterschiedlich tiefe und/oder unterschiedlich breite Ausbildung der Nuten oder Rillen ermöglichen.

In vorteilhafter Weise ist zusätzlich vorgesehen, dass sich während der Bearbeitung der Vorschub in Axialrichtung verändert. Bevorzugt wird dieser insbesondere in zumindest einem axialen Randbereich vergrößert. Hierdurch können in vorteilhafter Weise tiefere und breitere Nuten in zumindest einem, bevorzugt beiden axialen Randbereichen mit einer Ausgestaltung der zwischen den Nuten verbleibenden Stege kombiniert werden, die sich infolge der Vergrößerung des Vorschubs dahingehend ergibt, dass diese Stege, verglichen mit den bei einem niedrigeren Vorschub verbleibende Stege höher sind.

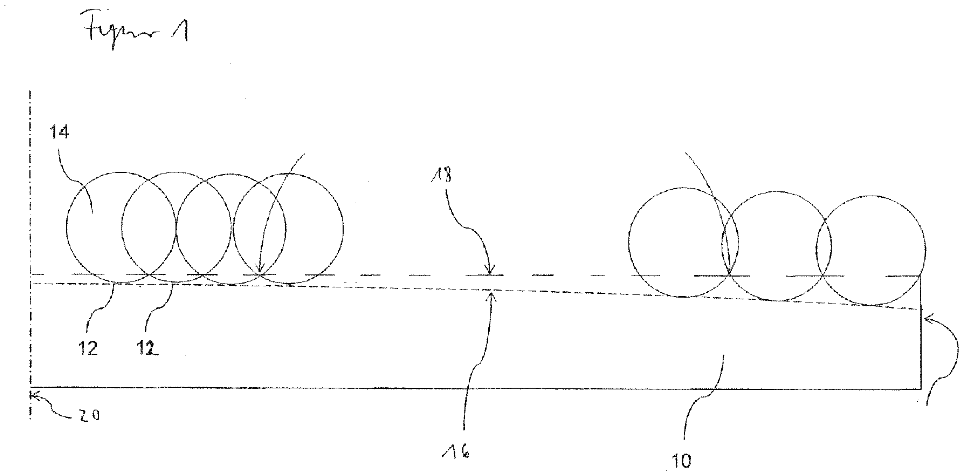

Mit anderen Worten befinden sich die Spitzen der Stege, die zwischen den Nuten oder Rillen ausgebildet sind, im Längsschnitt betrachtet, weiterhin auf einer Mantellinie, die weitgehend parallel zur Achse des Gleitlagers ist (vgl. Fig. 1). Durch die Vergrößerung der radialen Erstreckung des Werkzeugs werden die Nuten jedoch tiefer, und insbesondere in den Randbereichen fällt eine Linie, welche die "Talsohlen" der Nuten im Querschnitt verbindet, zum Rand hin ab. Es verbleiben somit insbesondere in diesen Bereichen höhere Stege, die sich bevorzugt nur in den Randbereichen, wo die Welle als Gegenläufer entsprechende Belastung aufbringt, einem verstärkten Verschleiß unterliegen und/oder zumindest geringfügig "zusammengedrückt" werden. Hierdurch bildet sich, im Längsschnitt betrachtet, der die Gleitlagerachse enthält, eine konvexe Form aus. Dieser Effekt tritt jedoch, wie erwähnt, nur in den besonders belasteten Randbereichen auf, und die sowohl in diesem, als auch den mittleren Bereichen verbleibenden Stege sind weiterhin so hoch, dass sie an die (belastete) Welle im Wesentlichen anliegen, und sich die Ölleckage in akzeptablen Grenzen hält.

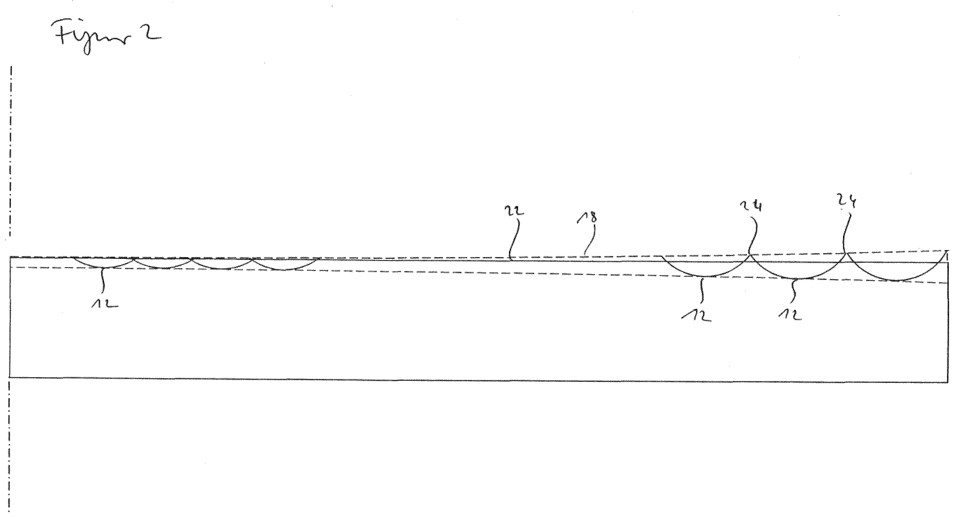

Um die Ölleckage noch weiter zu reduzieren, bietet die Erfindung auch die Möglichkeit, die Radialerstreckung des Werkzeugs zu erhöhen, jedoch zusätzlich den Vorschub in Axialrichtung so umfangreich zu erhöhen, dass eine Mantellinie, auf der sich die Spitzen der zwischen den Nuten verbleibenden Stege befinden, nicht mehr parallel zur Achse des Gleitlagers ist, sondern zu einem oder beiden Randbereichen hin ansteigt (vgl. Fig. 2). Bezüglich der Spitzen der Stege ergibt sich somit eine konkave Form, welche die Ölleckage reduziert. Durch den Verschleiß und Abrieb der Stege werden diese jedoch zumindest teilweise eingeebnet, so dass sich die "abgeplatteten" Stege auf einer konvexen Form befinden, die im Lastbereich die Kantenbelastung reduziert, so dass ein vorteilhaftes Lager entsteht. Der beschriebene Verschleiß betrifft, in einer Abwicklung des Lagers betrachtet, insbesondere zu beiden Rändern hin jeweils in etwa halbkreisförmige Zonen, deren breiteste Stelle in etwa mit dem jeweiligen Rand des Lagers zusammenfällt.

Wenn das Ausmaß, um das die Stege höher sind, jedoch geringer ist, als die Vergrößerung der Radialerstreckung des Werkzeugs, ergibt sich insgesamt die gewünschte Konvexform mit "abfallenden" Randbereichen. Hierdurch können die Gleiteigenschaften des Lagers verbessert werden.
Es sei ergänzend erwähnt, dass durch die erfindungsgemäßen Maßnahmen in beliebiger Weise individuelle, anforderungsgerechte, "customized", beispielsweise trompetenförmige Profile in Axialrichtung erzeugt werden können. Diese Formen können für diejenige Linie gelten, die, im Längsschnitt betrachtet, die Spitzen der Stege verbindet und/oder für diejenige Linie, welche die Talsohlen der Nuten verbindet. Insbesondere kann das Profil über die (axiale) Lagerbreite beliebig konvex oder konkav ausgebildet sein und/oder einzelne konvexe und/oder konkave Zonen aufweisen. Dies gilt in gleicher Weise für die Umfangsrichtung.

Bevorzugte Weiterbildungen sind in den weiteren Ansprüchen beschrieben.

Für bestimmte Anwendungsfälle bietet es Vorteile, wenn die Radialerstreckung und der Vorschub in Axialrichtung zumindest zeitweise gleichzeitig verändert werden, da hierdurch eine besondere Flexibilität bei der Gestaltung des Gleitlagers genutzt werden kann.

Gleichwohl kann es in bestimmten Situationen ebenso vorteilhaft sein, wenn die radiale Erstreckung und der Vorschub zumindest zeitweise nacheinander verändert werden. Besonders effizient und genau gestaltet sich die Bearbeitung, wenn die Radialerstreckung und/oder der Vorschub zumindest zeitweise bei jeder Umdrehung des Werkzeugs verändert wird. Hierdurch kann in vorteilhafter Weise zumindest bereichsweise eine Vielzahl von nebeneinander in Axialrichtung angeordneten und sich in Umfangsrichtung erstreckenden Nuten mit einer jeweils individuellen Tiefe und/oder Breite versehen werden. Im Hinblick auf diese Tiefe ist die verbleibende Materialdicke zu beachten, die durch die Vergrößerung der Radialerstreckung des Werkzeugs bei der (Innen)bearbeitung des Lagers geringer wird. Bezüglich der zwischen den Nuten, beispielsweise bei einem weitgehend kreisförmigen Werkzeug, verbleibenden Stege bleiben die Nuten jedoch gleich tief. Wie erwähnt, kann die Verringerung der verbleibenden Materialdicke wegen der Vergrößerung der Radialerstreckung des Werkzeugs in gewissem Umfang durch eine Vergrößerung des Vorschubs in Axialrichtung kompensiert werden, so dass die verbleibenden Stege höher, und die Nuten auch insoweit "tiefer" werden.

Wie erwähnt, wird derzeit bevorzugt, dass die Radialerstreckung und/oder der Vorschub des Werkzeugs bei der Bearbeitung zumindest eines axialen Randbereichs vergrößert wird.

Bei ersten Versuchen hat sich für die Ausbildung von Nuten oder Rillen in einem mittleren, d.h. von beiden Rändern entfernten Bereich, mit einer Tiefe von etwa 1,7 µm bis 2,1 µm und insbesondere etwa 1,9 µm und einer Tiefe der Nuten in zumindest einem axialen Randbereich von 5,6 µm bis 6,0 µm, insbesondere etwa 5,8 µm als vorteilhaft erwiesen.

Für den Vorschub, mit anderen Worten, die Breite oder den Mittenabstand einzelner Nuten sind für den mittleren Bereich etwa 0,27 mm bis 0,31 mm und/oder für zumindest einen Randbereich etwa 0,49 mm bis 0,53 mm vorgesehen. Insbesondere werden etwa 0,29 mm bzw. etwa 0,51 mm bevorzugt.

In vorteilhafter Weise kann das Gleitlager nachfolgend durch galvanische Verfahren, PVD, Sputtern, durch Polymerlack oder in anderer geeigneter Weise mit einer dünnen Gleit- und/oder Schutzschicht beschichtet werden. Im Hinblick auf die vorangehend und nachfolgend angegebenen Maße ist darauf hinzuweisen, dass diese für die bearbeitete Innenfläche vor einer Beschichtung gelten.

Hierbei kann das Werkzeug zumindest ein Piezoelement enthalten und/oder aus polykristallinem Diamant bestehen, um die vorangehend beschriebene Funktion zu realisieren. Dies kann ferner durch eine Mechanik mit Kipphebel und Stange, die auf einem sogenannten Master laufen, realisiert werden. Eine weitere Alternative besteht in einer geeigneten hydraulischen Steuerung eines Schneidwerkzeugs. Das Werkzeug kann ferner, in einer Ebene betrachtet, welche die Rotationsachse des Werkzeugs enthält, einen Radius an der Spitze, mit anderen Worten in dem Bereich, in dem die Bearbeitung des Gleitlagers oder Teils davon erfolgt, von etwa 5,4 mm bis 5,8 mm, insbesondere etwa 5,6 mm aufweisen.

Die Erfindung erzeugt ein Gleitlager(-teil), bei dem in Umfangsrichtung verlaufende Rillen in zumindest einem axialen Endbereich tiefer und breiter ausgeführt sind. Bevorzugte Weiterbildungen des erfindungsgemäßen

Gleitlager(-teils) entsprechen im Wesentlichen den Produkten der vorangehend und nachfolgend beschriebenen Ausführungsformen des Verfahrens sowie den Produkten, die durch die vorangehend und nachfolgend beschriebenen Vorrichtungen herstellbar sind. Es sei ferner erwähnt, dass jegliche Merkmale, die lediglich im Zusammenhang mit dem Verfahren, der Vorrichtung oder dem Gleitlager(-teil) alleine erwähnt sind, auch auf die jeweils anderen Gegenstände der Anmeldung anwendbar sind.

### Kurze Beschreibung der Zeichnungen

Nachfolgend werden Ausführungsbeispiele der Erfindung unter Bezugnahme auf die Figuren näher erläutert, welche zwei Vorgehensweisen bei der Bearbeitung eines Gleitlager(-teil)s in einer Prinzipdarstellung zeigen.

### Ausführliche Beschreibung bevorzugter Ausführungsformen der Erfindung

In Figur 1 ist ein Querschnitt durch eine Gleitlagerhälfte 10 mit Blick in Richtung des Umfangs gezeigt. Hierbei ist lediglich ein axialer Rand (gemäß Figur 1 der Bereich rechts von einer Mittelebene 20) dargestellt. Auf der (oberen) Lagerfläche des Gleitlagers verlaufen im Wesentlichen senkrecht zur Zeichenebene Nuten oder Rillen 12, die sich in Umfangsrichtung erstrecken und durch ein geeignetes, schematisch dargestelltes Werkzeug 14 ausgebildet werden. Das Werkzeug dreht sich im Wesentlichen um eine Achse, die gemäß der Figur 1 von links nach rechts verläuft und weist dementsprechend, wie in Figur 1 zu erkennen, in einer Ebene, welche diese Achse enthält, einen Radius auf. Dieser Radius definiert im Wesentlichen die Form der ausgebildeten Rillen 12. Ferner definiert die Radialerstreckung des Werkzeugs 14 in Richtung des Gleitlagerteils 10 die Tiefe der Nuten oder Rillen 12. Wie in Figur 1 zu erkennen ist, ist diese in einem axial mittleren (in Figur 1 linken) Bereich geringer als in einem axial äußeren (in Figur 1 rechten) Bereich.

Ferner wird bei der dargestellten Ausführungsform der Vorschub zwischen diesen Bereichen verändert. Mit anderen Worten werden die Rillen in dem mittleren Bereich mit einer geringeren Breite und damit vergleichsweise nahe beieinander ausgebildet. Wie im rechten Bereich der Figur 1 angedeutet ist, wird der Vorschub zum axialen Rand hin vergrößert, so dass die Breite der Nuten größer wird. Erfindungsgemäß kann die Radialerstreckung des Werkzeugs und bevorzugt auch der Vorschub in der beschriebenen Weise verändert werden, ohne dass die Bearbeitung an dem Gleitlagerteil 10 unterbrochen werden muss. Aus Figur 1 ist ferner als bevorzugte Maßnahme zu erkennen, dass sich die Tiefe der Rillen ausgehend von dem mittleren Bereich zu dem axialen Rand kontinuierlich vergrößert. Mit anderen Worten liegen die Täler der Rillen auf einer Mantellinie 16, die zu der Gleitlagerachse und zu der ebenfalls dargestellten Mantellinie 18, welche die Spitzen der Stege verbindet, nicht parallel ist, sondern zum Rand hin abfällt. Es ist zu erkennen, dass sich hierdurch die verbleibende Materialdicke verringert, jedoch die zwischen den Nuten verbleibenden Stege höher werden. Zu der schematischen Darstellung sei angemerkt, dass diese Vergrößerung der verbleibenden Stege geringer sein müsste als die Vergrößerung der Tiefe der Nuten, um eine "Konvexität" des Lagers zu erhalten. Es kann jedoch ebenso vorgesehen werden, dass, wie dargestellt, diejenige Mantellinie 18, welche die Spitzen der Stege verbindet, zu der Gleitlagerachse parallel bleibt, was durch geeignete Kombination der Veränderung der Radialerstreckung und der Veränderung des Vorschubs eingestellt werden kann.

Schließlich ist in Fig. 2 diejenige, ebenfalls denkbare Ausführungsform dargestellt, bei der einerseits die Radialerstreckung des (nicht dargestellten) Werkzeugs vergrößert wird, so dass sich die Täler der Nuten 12 auf einer Mantellinie befinden, die gegenüber einer Mantellinie 22, die parallel zur Gleitlagerachse (in Fig. 2 horizontal) ist, abfällt. Während der Bearbeitung wurde der axiale Vorschub jedoch so umfangreich vergrößert, dass eine Mantellinie 18, auf der sich die Spitzen 24 der Stege zwischen den Nuten 12 befinden, gegenüber der achsparallelen Mantellinie 22 ansteigt. Mit anderen Worten ergibt sich eine konkave Anordnung der Spitzen 24 der Stege. Während des Betriebs werden diese Stege jedoch insoweit eingeebnet und abgeplattet, dass sich die abgeplatteten Stege sogar gemäß Fig. 2 unterhalb der achsparallelen Mantellinie 22 befinden können, und sich somit eine günstige Kontur mit konvex angeordneten, abgeplatteten Stegen und weit auseinanderliegenden Nuten 12 ergibt.

## Patentansprüche

1. Verfahren zur Herstellung eines Gleitlagers oder eines Teils, insbesondere einer Hälfte davon, bei dem im Rahmen der Bearbeitung einer Innenfläche über deren gesamte Breite sowohl die Radialerstreckung als auch der Vorschub in Axialrichtung zumindest eines Werkzeugs während der Bearbeitung, das heißt, dass das Werkzeug nicht von dem zu bearbeitenden Gleitlager oder Teil davon entfernt wird, verändert werden, so dass sich die Breite von hierdurch ausgebildeten Rillen in Axialrichtung verändert.

2. Verfahren nach Anspruch 1, bei dem die Radialerstreckung und der Vorschub zumindest zeitweise gleichzeitig verändert werden.

3. Verfahren nach Anspruch 1, bei dem die Radialerstreckung und der Vorschub zumindest zeitweise nacheinander verändert werden.

4. Verfahren nach einem der vorangehenden Ansprüche, bei dem die Radialerstreckung und/oder der Vorschub zumindest zeitweise bei jeder Umdrehung des sich in dem Gleitlager(teil) drehenden Werkzeugs verändert wird.

5. Verfahren nach einem der vorangehenden Ansprüche, **dadurch gekennzeichnet, dass** die Radialerstreckung des Werkzeugs bei der Bearbeitung zumindest eines axialen Randbereichs vergrößert wird.

6. Verfahren nach einem der Ansprüche 1 bis 4, **dadurch gekennzeichnet, dass** die Radialerstreckung des Werkzeugs bei der Bearbeitung zumindest eines axialen Randbereichs verringert wird.

7. Verfahren nach einem der vorangehenden Ansprüche, **dadurch gekennzeichnet, dass** während der Bearbeitung der Vorschub in Axialrichtung in zumindest einem axialen Randbereich vergrößert wird.

8. Verfahren nach einem der vorangehenden Ansprüche, **dadurch gekennzeichnet, dass** mittels des Werkzeugs sich in Umfangsrichtung erstreckende Nuten oder Rillen ausgebildet werden, die in einem axial mittleren Bereich eine Tiefe von etwa 1,7 µm bis 2,1 µm und insbesondere etwa 1,9 µm und/oder in einem axialen Randbereich eine Tiefe von etwa 5,6 µm bis 6,0 µm und insbesondere etwa 5,8 µm aufweisen.

9. Verfahren nach einem der vorangehenden Ansprüche, **dadurch gekennzeichnet, dass** mittels des Werkzeugs sich in Umfangsrichtung erstreckende Nuten oder Rillen ausgebildet werden, die eine Breite oder einen Mittenabstand von etwa 0,27 mm bis 0,31 mm und insbesondere etwa 0,29 mm in einem axial mittleren Bereich und/oder von 0,49 mm bis 0,53 mm und insbesondere etwa 0,51 mm in zumindest einem axialen Randbereich aufweisen.

10. Verfahren nach einem der vorangehenden Ansprüche, **dadurch gekennzeichnet, dass** die Innenfläche nachfolgend galvanisch, mittels PVD, Sputtern oder mit einem Polymerlack beschichtet wird.

11. Verfahren nach einem der vorangehenden Ansprüche, **dadurch gekennzeichnet, dass** ein Schneidwerkzeug (14) zumindest ein Piezoelement und/oder zumindest einen polykristallinen Diamanten aufweist.

12. Verfahren nach einem der vorangehenden Ansprüche, **dadurch gekennzeichnet, dass** ein Schneidwerkzeug (14) einen Spitzen-Radius von etwa 5,4 mm bis 5,8 mm und insbesondere etwa 5,6 mm aufweist.

## Claims

1. Method for producing a friction bearing or a part, particularly half thereof, in which in the framework of machining the entire width of an inner surface, both the radial extension and also the feed in the axial direction of at least one tool are changed during machining, i.e. the tool is not removed from the friction bearing or part thereof that is to be machined, so that the width of grooves thereby formed changes in the axial direction.

2. Method according to claim 1, in which the radial extension and the feed are changed simultaneously, at least temporarily.

3. Method according to claim 1, in which the radial extension and the feed are changed one after the other at least temporarily.

4. Method according to any one of the preceding claims, in which the radial extension and/or the feed is changed at least temporarily at every rotation of the tool turning in the friction bearing (part).

5. Method according to any one of the preceding claims, **characterised in that** the radial extension of the tool is increased during the machining of at least one axial edge area.

6. Method according to any one of claims 1 to 4, **characterised in that** the radial extension of the tool is reduced during the machining of at least one axial edge area.

7. Method according to any one of the preceding claims, **characterised in that**, during machining, the feed in the axial direction is increased in at least one axial edge area.

8. Method according to any one of the preceding claims, **characterised in that** slots or grooves extending in the circumferential direction are formed using the tool, said slots or grooves having a depth of about 1.7µm to 2.1µm and more particularly about 1.9µm in an axially central area and/or a depth of about 5.6µm to 6.0µm and more particularly about 5.8µm in an axial edge area.

9. Method according to any one of the preceding claims, **characterised in that** slots or grooves extending in the peripheral direction are formed using the tool, said slots or grooves having a width or a centre-to-centre distance of about 0.27mm to 0.31mm and more particularly about 0.29mm in an axially central area and/or of 0.49mm to 0.53mm and more particularly about 0.51mm in at least one axial edge area.

10. Method according to any one of the preceding claims, **characterised in that** the inner surface is coated subsequently by electroplating, by means of PVD, sputtering or with a polymer varnish.

11. Method according to any one of the preceding claims, **characterised in that** a cutting tool (14) has at least one piezo element and/or at least one polycrystalline diamond.

12. Method according to any one of the preceding claims, **characterised in that** a cutting tool (14) has a tip radius of about 5.4mm to 5.8mm and more particularly about 5.6mm.

## Revendications

1. Procédé de fabrication d'un palier lisse ou d'une partie, en particulier d'une moitié de celui-ci, dans lequel, dans le cadre de l'usinage d'une surface interne sur toute sa largeur, on modifie autant l'extension radiale que l'avance dans la direction axiale au moins d'un outil pendant l'usinage, c'est-à-dire que l'outil n'est pas retiré du palier lisse ou de sa partie à usiner de sorte que la largeur de rainures formées par celui-ci soit modifiée dans la direction axiale.

2. Procédé selon la revendication 1, dans lequel l'extension radiale et l'avance sont modifiées simultanément au moins par moments.

3. Procédé selon la revendication 1, dans lequel l'extension radiale et l'avance sont modifiées l'une après l'autre au moins par moments.

4. Procédé selon l'une quelconque des revendications précédentes, dans lequel l'extension radiale et/ou l'avance sont modifiées au moins par moments lors de chaque rotation de l'outil tournant dans le palier lisse (ou une partie de celui-ci).

5. Procédé selon l'une quelconque des revendications précédentes, **caractérisé en ce que** l'extension radiale de l'outil est amplifiée lors de l'usinage d'au moins une zone de bord axiale.

6. Procédé selon l'une quelconque des revendications 1 à 4, **caractérisé en ce que** l'extension radiale de l'outil est réduite lors de l'usinage d'au moins une zone de bord axiale.

7. Procédé selon l'une quelconque des revendications précédentes, **caractérisé en ce que**, au cours de l'usinage, l'avance est amplifiée dans la direction axiale dans au moins une zone de bord axiale.

8. Procédé selon l'une quelconque des revendications précédentes, **caractérisé en ce que**, au moyen de l'outil, on forme des encoches ou des rainures s'étendant dans la direction circonférentielle, qui présentent dans une zone centrale axiale une profondeur d'environ 1,7 µm à 2,1 µm et, en particulier, d'environ 1,9 µm et/ou dans une zone de bord axiale une profondeur d'environ 5,6 µm à 6,0 µm et, en particulier, d'environ 5,8 µm.

9. Procédé selon l'une quelconque des revendications précédentes, **caractérisé en ce que**, au moyen de l'outil, on forme des encoches ou des rainures s'étendant dans la direction circonférentielle, qui présentent une largeur ou un intervalle central d'environ 0,27 mm à 0,31 mm et, en particulier, d'environ 0,29 mm dans une zone centrale axiale et/ou de 0,49 mm à 0,53 mm et, en particulier, d'environ 0,51 mm dans au moins une zone de bord axiale.

10. Procédé selon l'une quelconque des revendications précédentes, **caractérisé en ce que** la face interne est ensuite revêtue par voie galvanique, au moyen de PVD, par pulvérisation ou avec une laque polymère.

11. Procédé selon l'une quelconque des revendications précédentes, **caractérisé en ce qu'**un outil de coupe (14) présente au moins un élément piézoélectrique et/ou au moins un diamant polycristallin.

12. Procédé selon l'une quelconque des revendications précédentes, **caractérisé en ce qu'**un outil de coupe (14) présente un rayon de pointe d'environ 5,4 mm à 5,8 mm et, en particulier, d'environ 5,6 mm.
